# EUROPEAN PATENT APPLICATION

(11) **EP 4 644 652 A1**
(43) Date of publication of application: **05.11.2025**
(21) Application number: 23910893.9
(22) Date of filing: 29.12.2023
(51) Int. Cl.: E05F 15/622, E05F 15/603, B60J 5/04, E05C 17/30

(54) **SUPPORTING ROD ASSEMBLY APPLIED TO SPECIAL-SHAPED SIDE DOOR OF VEHICLE, AND VEHICLE**

(30) Priority: 29.12.2022 CN 202211709436
(71) Applicant: BYD Company Limited, Shenzhen, Guangdong 518118 (CN)
(72) Inventor: QIU, Shoufa, Shenzhen, Guangdong 518118 (CN); LI, Yu, Shenzhen, Guangdong 518118 (CN); HUANG, Xiaolan, Shenzhen, Guangdong 518118 (CN); HE, Wei, Shenzhen, Guangdong 518118 (CN); HU, Haihuang, Shenzhen, Guangdong 518118 (CN)
(74) Representative: Mathys & Squire
(86) International application number: PCT/CN2023/143040
(87) International publication number: WO 2024/140979

(57) **Abstract**

A supporting rod assembly (1) applied to a special-shaped side door of a vehicle (10). The supporting rod assembly comprises: a master drive supporting rod (2), the master drive supporting rod (2) comprising a master housing (21), a master outer guide pipe (235), a master end cover (22) and a drive assembly (23), wherein the master outer guide pipe (235) is movably connected to the master housing (21), the end of the master outer guide pipe (235) that faces away from the master housing (21) is fixedly connected to the master end cover (22), and the drive assembly (23) is arranged in the master housing (21) and is in transmission fit with the master end cover (22); and a driven supporting rod (3), the driven supporting rod (3) comprising a slave housing (31), a slave outer guide pipe (333), a slave end cover (32) and a slave elastic assembly (33), wherein the slave outer guide pipe (333) is movably connected to the slave housing (31) by means of the slave elastic assembly (33), the end of the slave outer guide pipe (333) that is away from the slave housing (31) is fixedly connected to the slave end cover (32), the slave housing (31) is fixedly connected to the master housing (21), and the slave end cover (32) is fixedly connected to the master end cover (22). Further provided is a vehicle (10) having the supporting rod assembly (1). The supporting rod assembly occupies a small space, is relatively easy to arrange, and can support a side door of relatively large mass.

## Description

### CROSS-REFERENCE TO RELATED APPLICATIONS

The present disclosure claims priority to Chinese Patent Application No. 202211709436.9, entitled "SUPPORTING ROD ASSEMBLY APPLIED TO SPECIAL-SHAPED SIDE DOOR OF VEHICLE, AND VEHICLE" and filed on December 29, 2022. The entire content of the above-referenced application is incorporated herein by reference.

### FIELD

The present disclosure relates to the technical field of vehicles, and in particular, to a supporting rod assembly applied to a special-shaped side door of a vehicle, and a vehicle.

### BACKGROUND

Currently, as the vehicle population increases year by year, peoples' demands for vehicles have shifted from transportation in the beginning to aspects such as appearance, comfort, and electrification. Therefore, vehicle doors have evolved from original manual switch operation to electrification and intelligence systems, thereby greatly improving users' vehicle experiences.

In a related art, with continuous increase of vehicle door weights, the supporting force of existing support rods is insufficient, which restricts numerous innovations of vehicle doors.

### SUMMARY

The present disclosure is intended to solve at least one of the technical problems existing in the related art. Therefore, the present disclosure provides a supporting rod assembly applied to a special-shaped side door of a vehicle. The supporting rod assembly occupies a small space, is relatively easy to arrange, and can support a side door with relatively large mass.

The present disclosure provides a vehicle using the above-mentioned supporting rod assembly.

The supporting rod assembly applied to a special-shaped side door of a vehicle according to the present disclosure includes: a master drive supporting rod, where the master drive supporting rod includes a master housing, a master outer guide pipe, a master end cover, and a drive assembly, the master outer guide pipe being movably connected to the master housing, an end of the master outer guide pipe that faces away from the master housing being fixedly connected to the master end cover, and the drive assembly being arranged in the master housing and in transmission fit with the master end cover; and a driven supporting rod. The driven supporting rod includes a slave housing, a slave outer guide pipe, a slave end cover, and a slave elastic assembly. The slave outer guide pipe is movably connected to the slave housing by the slave elastic assembly, and an end of the slave outer guide pipe that is away from the slave housing is fixedly connected to the slave end cover. The slave housing is fixedly connected to the master housing, and the slave end cover is fixedly connected to the master end cover.

In the supporting rod assembly according to the present disclosure, the master drive supporting rod is in fit and connection with the driven supporting rod, so that the supporting rod assembly can be an integrated electric supporting rod for a vehicle door, and therefore can increase a value of a transmitted force, occupies a small space, and is relatively easy to arrange. The drive assembly is arranged in the master drive supporting rod, and the slave elastic assembly is arranged in the driven supporting rod, so that a side door with relatively large mass can be supported.

In some examples of the present disclosure, the slave elastic assembly includes a first slave elastic member, and the first slave elastic member has a fixed member and a movable member. The movable member is movable relative to the fixed member. The fixed member is connected to the slave housing, and the movable member is connected to the slave end cover.

In some examples of the present disclosure, the first slave elastic member is a gas spring, the fixed member is a cylinder, and the movable member is a piston rod. One end of the piston rod is movably arranged in the cylinder, and the other end of the piston rod is connected to the slave end cover.

In some examples of the present disclosure, the slave elastic assembly further includes a second slave elastic member. The second slave elastic member is sleeved on the first slave elastic member. Two ends of the second slave elastic member are arranged on the slave housing and the slave end cover respectively, and the slave outer guide pipe is sleeved on the second slave elastic member.

In some examples of the present disclosure, the second slave elastic member is a helical spring.

In some examples of the present disclosure, the drive assembly includes a driving motor, a lead screw, and a master inner guide pipe. The driving motor is arranged in the master housing, and the lead screw is in transmission connection with the driving motor. The master inner guide pipe is in threaded connection with the lead screw. The master inner guide pipe is connected to the master end cover, and the master outer guide pipe is sleeved on the master inner guide pipe.

In some examples of the present disclosure, the drive assembly further includes a master elastic member, and the master elastic member is sleeved on the master inner guide pipe. Two ends of the master elastic member are connected to the driving motor and the master end cover respectively, and the master outer guide pipe is sleeved on the master elastic member.

In some examples of the present disclosure, the drive assembly further includes a plurality of friction plates, and the plurality of friction plates are stacked inside the master housing in an axial direction of the master housing. The lead screw passes through the plurality of friction plates, and inner walls of through holes in the plurality of friction plates for the lead screw to pass through are in friction fit with the lead screw, to axially limit the master inner guide pipe (233).

In some examples of the present disclosure, one driven supporting rod is provided, the slave housing is arranged on a side of the master housing and is arranged side by side with the master housing, and the slave end cover is arranged on a side of the master end cover and is arranged side by side with the master end cover, or at least two driven supporting rods are provided, at least two slave housings and the master housing are circular as a whole and are circumferentially sequentially connected, and at least two slave end covers and the master end cover are circular as a whole and are circumferentially sequentially connected.

In some examples of the present disclosure, the master housing is provided with a first end, and the master end cover is provided with a second end. One of the first end and the second end is configured to be hinged to a vehicle door of the vehicle, and the other of the first end and the second end is configured to be hinged to a vehicle body of the vehicle.

The vehicle according to the present disclosure includes the supporting rod assembly described above.

The additional aspects and advantages of the present disclosure are provided in the following description, some of which become apparent from the following description or may be learned from practices of the present disclosure.

### BRIEF DESCRIPTION OF THE DRAWINGS

The foregoing and/or additional aspects and advantages of the present disclosure become apparent and comprehensible from the following descriptions of the embodiments with reference to the accompanying drawings, in which
FIG. 1 is a schematic structural diagram of a supporting rod assembly according to an embodiment of the present disclosure;
FIG. 2 is a sectional view of a supporting rod assembly according to an embodiment of the present disclosure;
FIG. 3 is a diagram of a mechanical energy configuration principle;
FIG. 4 is a diagram of another mechanical energy configuration principle; and
FIG. 5 is a schematic diagram of a vehicle according to an embodiment of the present disclosure.

In the drawings:
1. Supporting rod assembly;
2. Master drive supporting rod; 21. Master housing; 211. First end; 22. Master end cover; 221. Second end; 23. Drive assembly; 231. Driving motor; 232. Lead screw; 233. Master inner guide pipe; 234. Master elastic member; 235. Master outer guide pipe; 236. Friction plate; 3. Driven supporting rod; 31. Slave housing; 32. Slave end cover; 33. Slave elastic assembly; 331. First slave elastic member; 3311. Fixed member; 3312. Movable member; 332. Second slave elastic member; 333. Slave outer guide pipe;
10. Vehicle; 101. Vehicle door; 102. Vehicle body.

### DETAILED DESCRIPTION

Embodiments of the present disclosure are described in detail below. The embodiments described with reference to the accompanying drawings are exemplary.

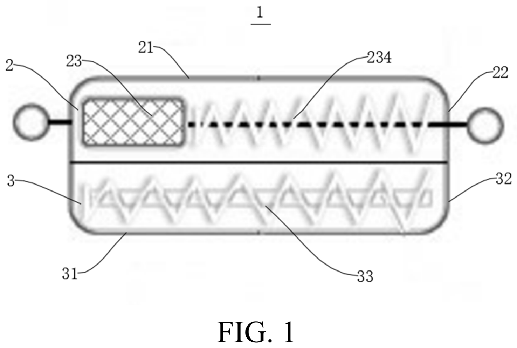

A supporting rod assembly 1 according to an embodiment of the present disclosure is described below with reference to FIG. 1 to FIG. 4. The supporting rod assembly 1 can be applied to at least one of a side door, a front hatch cover assembly, an electric tailgate, and an electric trunk assembly of a vehicle. The side door may be a special-shaped side door, and the special-shaped side door includes a butterfly door, a scissor door, or a gull wing door.

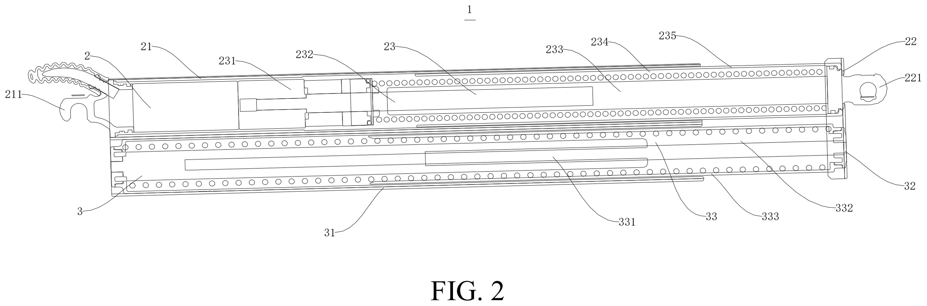

As shown in FIG. 1 and FIG. 2, the supporting rod assembly 1 applied to a special-shaped side door of a vehicle 10 according to the present disclosure includes a master drive supporting rod 2 and a driven supporting rod 3. The master drive supporting rod 2 includes a master housing 21, a master outer guide pipe 235, a master end cover 22, and a drive assembly 23. The master outer guide pipe 235 is movably connected to the master housing 21. An end of the master outer guide pipe 235 that faces away from the master housing 21 is fixedly connected to the master end cover 22, and the drive assembly 23 is arranged in the master housing 21 and is in transmission fit with the master end cover 22. The driven supporting rod 3 includes a slave housing 31, a slave outer guide pipe 333, a slave end cover 32, and a slave elastic assembly 33. The slave outer guide pipe 333 is movably connected to the slave housing 31 by the slave elastic assembly 33, and an end of the slave outer guide pipe 333 that is away from the slave housing 31 is fixedly connected to the slave end cover 32. The slave housing 31 is fixedly connected to the master housing 21, and the slave end cover 32 is fixedly connected to the master end cover 22.

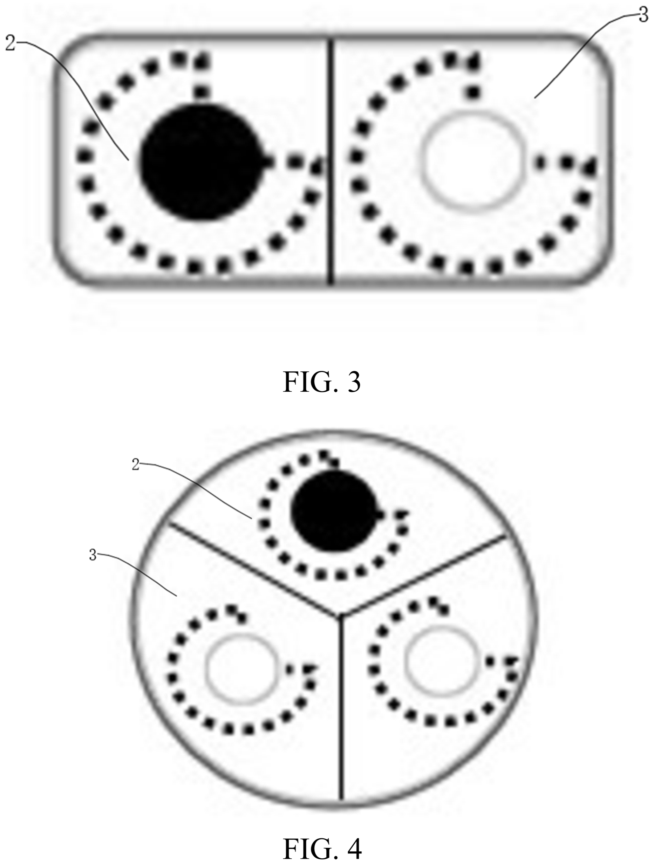

It will be understood that the master drive supporting rod 2 and the driven supporting rod 3 constitute a main structure of the supporting rod assembly 1. The master outer guide pipe 235 may be movably connected to the master housing 21, and the other end of the master outer guide pipe 235 is fixedly connected to the master end cover 22. Therefore, the master outer guide pipe 235 and the master end cover 22 may be connected into a whole. The drive assembly 23 is located in the master housing 21, and the drive assembly 23 may be in transmission fit and connection with the master end cover 22. In this way, the drive assembly 23 can be protected, thereby prolonging the service life of the drive assembly 23. Similarly, the slave outer guide pipe 333 may be movably connected to the slave housing 31 by the slave elastic assembly 33, and the other end of the slave outer guide pipe 333 is fixedly connected to the slave end cover 32. Therefore, the slave outer guide pipe 333 and the slave end cover 32 are connected into a whole, and then the master drive supporting rod 2 and the driven supporting rod 3 are connected into a whole, to enhance an overall structural strength of the supporting rod assembly 1. Moreover, theoretically, two or more additional mechanical energy configurations can be implemented. For example, FIG. 3 and FIG. 4 are diagrams of mechanical energy configuration principles.

Therefore, the master drive supporting rod 2 is in fit and connection with the driven supporting rod 3, so that the supporting rod assembly 1 can be an integrated electric supporting rod for a vehicle door, and therefore the value of the transmitted force can be increased. Moreover, the supporting rod assembly 1 occupies a small space and is relatively easy to arrange. The drive assembly 23 is arranged in the master drive supporting rod 2, and the slave elastic assembly 33 is arranged in the driven supporting rod 3, so that a side door with relatively large mass can be supported.

As shown in FIG. 2, the slave elastic assembly 33 includes a first slave elastic member 331. The first slave elastic member 331 has a fixed member 3311 and a movable member 3312. The movable member 3312 is movable relative to the fixed member 3311. The fixed member 3311 is connected to the slave housing 31, and the movable member 3312 is connected to the slave end cover 32. That is, one end of the first slave elastic member 331 is fixed to the slave housing 31, the other end of the first slave elastic member 331 is movably connected to the slave end cover 32, so that the first slave elastic member 331 can be extended or retracted at the driven supporting rod 3, and therefore driven support can be implemented by changing a position of the fixed member 3311.

Optionally, as shown in FIG. 2, the first slave elastic member 331 may be provided as a gas spring, the fixed member 3311 may be provided as a cylinder, and the movable member 3312 may be provided as a piston rod. The piston rod is movably arranged in the cylinder. It can be understood that the gas spring has a large elastic tension, so that the supporting rod assembly 1 can support objects with large mass. The piston rod may be arranged in the cylinder, so that the movable member 3312 moves relative to the fixed member 3311. For example, when the vehicle door 101 needs higher durability cycles, a matched force value of the gas spring needs to be relatively small.

In addition, as shown in FIG. 2, the slave elastic assembly 33 further includes a second slave elastic member 332. The second slave elastic member 332 is sleeved on the first slave elastic member 331, two ends of the second slave elastic member 332 are arranged on the slave housing 31 and the slave end cover 32 respectively, and the slave outer guide pipe 333 is sleeved on the second slave elastic member 332. That is, the first slave elastic member 331 and the second slave elastic member 332 are sleeved with each other, and the slave outer guide pipe 333 and the second slave elastic member 332 are sleeved with each other. Therefore, the slave elastic assembly 33 can be extended or retracted from the position of the slave outer guide pipe 333, to prevent the slave elastic assembly 33 from deviating from a movement track. This can ensure operation stability of the slave elastic assembly 33, thereby causing an internal space of the driven supporting rod 3 to be more compact, and further increasing the elastic tension of the slave elastic assembly 33. Moreover, the supporting rod assembly 1 can support objects with large mass.

Optionally, as shown in FIG. 2, the second slave elastic member 332 is a helical spring. With this arrangement, the first slave elastic member 331 can be distinguished from the second slave elastic member 332. Moreover, the helical spring has a large elastic tension, so that the supporting rod assembly 1 can support objects with large mass. For example, when the vehicle door 101 needs higher durability cycles, the helical spring needs to be designed with increased force capacity.

As shown in FIG. 2, the drive assembly 23 includes a driving motor 231, a lead screw 232, and a master inner guide pipe 233. The driving motor 231 is arranged in the master housing 21, and the lead screw 232 is in transmission connection with the driving motor 231. The master inner guide pipe 233 is in threaded connection with the lead screw 232. The master inner guide pipe 233 is connected to the master end cover 22, and the master outer guide pipe 235 is sleeved on the master inner guide pipe 233. The driving motor 231, the lead screw 232, and the master inner guide pipe 233 are located in the master housing 21, and the master housing 21 can protect the driving motor 231, the lead screw 232, and the master inner guide pipe 233, thereby prolonging the service life of the drive assembly 23. The driving motor 231, the lead screw 232, and the master inner guide pipe 233 are interconnected, so that a driving force generated by the driving motor 231 can be transmitted to the lead screw 232. The threaded connection between the lead screw 232 and the master inner guide pipe 233 can convert rotation of the driving motor 231 into movement of the master inner guide pipe 233 and the master end cover 22, and then the vehicle door 101 can be effectively supported. In addition, the master outer guide pipe 235 and the master inner guide pipe 233 are sleeved with each other, so that the position of the master outer guide pipe 235 can be used for extension or retraction.

According to some examples of the present disclosure, as shown in FIG. 2, the drive assembly 23 further includes a master elastic member 234. The master elastic member 234 is sleeved on the master inner guide pipe 233. Two ends of the master elastic member 234 are connected to the driving motor 231 and the master end cover 22 respectively, and the master outer guide pipe 235 is sleeved on the master elastic member 234. That is, the master elastic member 234 and the master inner guide pipe 233 are sleeved with each other, and the master elastic member 234 is located between the driving motor 231 and the master end cover 22, so that a driving force of the driving motor 231 can be transmitted to the master elastic member 234, and then the position of the master outer guide pipe 235 can be used for extension or retraction. This prevents the master elastic member 234 from deviating from the movement track, maintains movement consistency, and can better ensure operation stability of the master drive supporting rod 2.

In addition, as shown in FIG. 2, the drive assembly 23 further includes a plurality of friction plates 236. The plurality of friction plates 236 are stacked inside the master housing 21 in an axial direction of the master housing 21. The lead screw 232 passes through the plurality of friction plates 236, and inner walls of through holes in the plurality of friction plates 236 for the lead screw 232 to pass through are in friction fit with the lead screw 232, to axially limit the master inner guide pipe 233. That is, the plurality of friction plates 236 are arranged on the lead screw 232, and the friction plates 236 are located inside the master outer guide pipe 235. Therefore, the master outer guide pipe 235 can be axially limited by friction, to prevent the master outer guide pipe 235 from deviating in position, thereby ensuring operation stability of the master drive supporting rod 2.

Optionally, as shown in FIG. 2 and FIG. 4, one driven supporting rod 3 is provided, the slave housing 31 is arranged on a side of the master housing 21 and is arranged side by side with the master housing 21, and the slave end cover 32 is arranged on a side of the master end cover 22 and is arranged side by side with the master end cover 22, That is, the master drive supporting rod 2 and the driven supporting rod 3 are arranged side by side, and the master end cover 22 and the slave end cover 32 are located on the same side. This can maximize the transmitted force, minimize spatial occupancy, and facilitate installation.

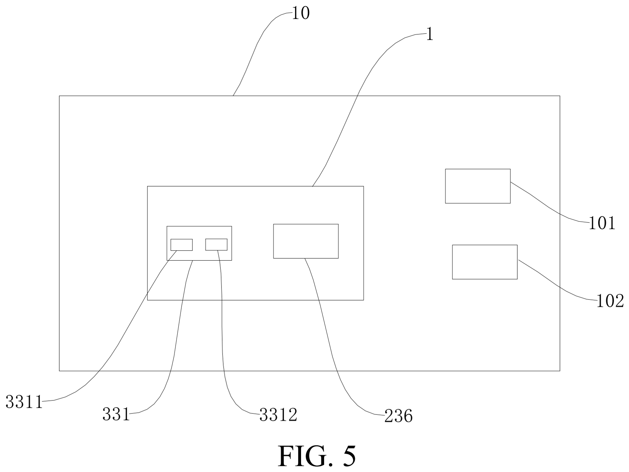

Alternatively, optionally, as shown in FIG. 2 and FIG. 5, at least two driven supporting rods 3 are provided, and at least two slave housings 31 and the master housing 21 are circular as a whole and are circumferentially sequentially connected. At least two slave end covers 32 and the master end cover 22 are circular as a whole and are circumferentially sequentially connected. With this arrangement, the supporting rod assembly 1 can support heavy objects and implement automatic opening and closing. Moreover, two driven supporting rods 3 can permit both ramp stabilisation and suspension at any position. The spatial occupancy of the driven supporting rods 3 and the master drive supporting rod 2 arranged in this way is also small, which facilitates installation.

Specifically, a speed limiting member outside the supporting rod assembly 1 is connected to a positive electrode and a negative electrode of a power supply. The driving motor 231 rotates, so that the rotation is transmitted to the lead screw 232, and the master elastic member 234 is in a prepressed state when mounted, that is, there is a certain force for movement in an extension direction. A specific force value or prepressing amount is determined based on parameters such as mass, a center of mass, and an opening angle of a specific vehicle door 101. When the driving motor 231 is driven to rotate after the power supply is energized, the master inner guide pipe 233 extends, and the master end cover 22 and the master outer guide pipe 235 also move synchronously. In this case, a spatial axial distance between the master end cover 22 and the driving motor 231 decreases, and a force value of the master elastic member 234 increases continuously, and vice versa.

In some examples of the present disclosure, the master housing 21 is provided with a first end 211, and the master end cover 22 is provided with a second end 221. One of the first end 211 and the second end 221 is configured to be hinged to a vehicle door 101, and the other of the first end 211 and the second end 221 is configured to be hinged to a vehicle body 102. That is, the master housing 21 and the master end cover 22 each may be provided with an end, and the end may be configured to be hinged to the vehicle door 101 or the vehicle body 102. Therefore, the supporting rod assembly 1 can be hinged between the vehicle door 101 and the vehicle body 102, and there is no need to additionally provide the ends from the slave housing 31 and the slave end cover 32, so that the structure of the supporting rod assembly 1 can be simplified.

A vehicle 10 according to an embodiment of the present disclosure includes the supporting rod assembly 1 described in the above embodiment.

In the description of the present disclosure, it should be understood that the orientation or positional relationships indicated by terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", and "circumferential" are based on the orientation or positional relationships shown in the accompanying drawings, are merely for ease of describing the present disclosure and simplifying the description, and are not intended to indicate or imply that the apparatus or element referred to has to have a particular orientation and be constructed and operated in a particular orientation. Therefore, this should not be construed as limiting the present disclosure.

In the description of the present disclosure, "first feature" and "second feature" each may include one or more such features. In the description of the present disclosure, "a plurality of/multiple" means two or more. In the description of the present disclosure, that the first feature is "above" or "below" the second feature may include that the first feature is in direct contact with the second feature, or may include that the first feature and the second feature are not in direct contact but are contacted via another feature therebetween. In the description of the present disclosure, that the first feature is "above" the second feature includes that the first feature is over or obliquely above the second feature, or only indicates that the first feature has a level height greater than that of the second feature.

In the description of this specification, the description with reference to the terms such as "an embodiment", "some embodiments", "an exemplary embodiment", "an example", "a specific example", or "some examples" means that specific features, structures, materials, or characteristics described with reference to the embodiment or example are included in at least one embodiment or example of the present disclosure. In this specification, exemplary descriptions of the foregoing terms do not necessarily refer to the same embodiment or example.

Although the embodiments of the present disclosure have been shown and described, a person of ordinary skill in the art should understand that various changes, modifications, replacements, and variations may be made to the embodiments without departing from the principles and purposes of the present disclosure, and the scope of the present disclosure is defined by the claims and equivalents thereof.

## Claims

1. A supporting rod assembly (1) applied to a special-shaped side door of a vehicle (10), comprising:
a master drive supporting rod (2), the master drive supporting rod (2) comprising a master housing (21), a master outer guide pipe (235), a master end cover (22), and a drive assembly (23), the master outer guide pipe (235) being movably connected to the master housing (21), an end of the master outer guide pipe (235) that faces away from the master housing (21) being fixedly connected to the master end cover (22), and the drive assembly (23) being arranged in the master housing (21) and being in transmission fit with the master end cover (22); and
a driven supporting rod (3), the driven supporting rod (3) comprising a slave housing (31), a slave outer guide pipe (333), a slave end cover (32), and a slave elastic assembly (33), the slave outer guide pipe (333) being movably connected to the slave housing (31) by the slave elastic assembly (33), an end of the slave outer guide pipe (333) that is away from the slave housing (31) being fixedly connected to the slave end cover (32), the slave housing (31) being fixedly connected to the master housing (21), and the slave end cover (32) being fixedly connected to the master end cover (22).

2. The supporting rod assembly (1) applied to a special-shaped side door of a vehicle (10) according to claim 1, wherein the slave elastic assembly (33) comprises a first slave elastic member (331), the first slave elastic member (331) has a fixed member (3311) and a movable member (3312), the movable member (3312) is movable relative to the fixed member (3311), the fixed member (3311) is connected to the slave housing (31), and the movable member (3312) is connected to the slave end cover (32).

3. The supporting rod assembly (1) applied to a special-shaped side door of a vehicle (10) according to claim 2, wherein the first slave elastic member (331) is a gas spring, the fixed member (3311) is a cylinder, the movable member (3312) is a piston rod, one end of the piston rod is movably arranged in the cylinder, and the other end of the piston rod is connected to the slave end cover (32).

4. The supporting rod assembly (1) applied to a special-shaped side door of a vehicle (10) according to claim 2 or 3, wherein the slave elastic assembly (33) further comprises a second slave elastic member (332), the second slave elastic member (332) is sleeved on the first slave elastic member (331), two ends of the second slave elastic member (332) are arranged on the slave housing (31) and the slave end cover (32) respectively, and the slave outer guide pipe (333) is sleeved on the second slave elastic member (332).

5. The supporting rod assembly (1) applied to a special-shaped side door of a vehicle (10) according to claim 4, wherein the second slave elastic member (332) is a helical spring.

6. The supporting rod assembly (1) applied to a special-shaped side door of a vehicle (10) according to any one of claims 1 to 5, wherein the drive assembly (23) comprises a driving motor (231), a lead screw (232), and a master inner guide pipe (233), the driving motor (231) is arranged in the master housing (21), the lead screw (232) is in transmission connection with the driving motor (231), the master inner guide pipe (233) is in threaded connection with the lead screw (232), the master inner guide pipe (233) is connected to the master end cover (22), and the master outer guide pipe (235) is sleeved on the master inner guide pipe (233).

7. The supporting rod assembly (1) applied to a special-shaped side door of a vehicle (10) according to claim 6, wherein the drive assembly (23) further comprises a master elastic member (234), the master elastic member (234) is sleeved on the master inner guide pipe (233), two ends of the master elastic member (234) are connected to the master housing (21) and the master end cover (22) respectively, and the master outer guide pipe (235) is sleeved on the master elastic member (234).

8. The supporting rod assembly (1) applied to a special-shaped side door of a vehicle (10) according to claim 6 or 7, wherein the drive assembly (23) further comprises a plurality of friction plates (236), the plurality of friction plates (236) are stacked inside the master housing (21) in an axial direction of the master housing (21), the lead screw (232) passes through the plurality of friction plates (236), and inner walls of through holes in the plurality of friction plates (236) for the lead screw (232) to pass through are in friction fit with the lead screw (232), to axially limit the master inner guide pipe (233).

9. The supporting rod assembly (1) applied to a special-shaped side door of a vehicle (10) according to any one of claims 1 to 8, wherein one driven supporting rod (3) is provided, the slave housing (31) is arranged on a side of the master housing (21) and is arranged side by side with the master housing (21), and the slave end cover (32) is arranged on a side of the master end cover (22) and is arranged side by side with the master end cover (22), or
at least two driven supporting rods (3) are provided, at least two slave housings (31) and the master housing (21) are circular as a whole and are circumferentially sequentially connected, and at least two slave end covers (32) and the master end cover (22) are circular as a whole and are circumferentially sequentially connected.

10. The supporting rod assembly (1) applied to a special-shaped side door of a vehicle (10) according to any one of claims 1 to 9, wherein the master housing (21) is provided with a first end (211), the master end cover (22) is provided with a second end (221), one of the first end (211) and the second end (221) is configured to be hinged to a vehicle door (101) of the vehicle (10), and the other of the first end (211) and the second end (221) is configured to be hinged to a vehicle body (102) of the vehicle (10).

11. A vehicle (10), comprising: the supporting rod assembly (1) according to any one of claims 1 to 10.
